# EUROPEAN PATENT APPLICATION

(11) **EP 3 457 176 A1**
(43) Date of publication of application: **20.03.2019**
(21) Application number: 18193314.4
(22) Date of filing: 08.09.2018
(51) Int. Cl.: G01S 17/00, G01S 17/87, G01S 17/89

(54) **LIDAR AIR DATA SYSTEM WITH DECOUPLED LINES OF SIGHT**

(30) Priority: 19.09.2017 US 201715709240
(71) Applicant: Honeywell International Inc., Morris Plains, NJ New Jersey 07950 (US)
(72) Inventor: LODDEN, Grant, Morris Plains, NJ New Jersey 07950 (US); WIEBOLD, Matthew, Morris Plains, NJ New Jersey 07950 (US); GARDE, Jason, Morris Plains, NJ New Jersey 07950 (US)
(74) Representative: Houghton, Mark Phillip

(57) **Abstract**

An air data sensor system comprises a plurality of light detection and ranging (LiDAR) units spatially distributed on a vehicle body, with each of the LiDAR units comprising a transmit/receive module having a decoupled line of sight with respect to the other LiDAR units. A processor is in operative communication with each of the LiDAR units. The processor is configured to receive collected light data from each of the LiDAR units; correct for spatial separation between the decoupled lines of sight of the LiDAR units; compensate for alignment shifts due to perturbations in the vehicle body; and compute one or more air data parameters based on the collected light data, the corrections for spatial separation, and the compensation for alignment shifts. The LiDAR units are each configured to transmit light into respective external interaction air regions, and collect scattered portions of the transmitted light from the external interaction air regions.

## Description

### BACKGROUND

Light Detection and Ranging (LiDAR) based air data is a promising technology that could ultimately augment or replace legacy air data systems on aircraft. Current state of the art LiDAR air data systems are typically comprised of an optical transceiver and a processing line replaceable unit (LRU). The optical transceiver contains several optical assemblies designed to transmit and receive light at different angles or directions. A single transmit and receive pair is configured to form an optical line of sight (LOS) or an interaction region where the measurement is performed. In order to derive angle of attack and angle of sideslip, at least three distinct lines of sight are required. Normally, the distinct lines of sight are configured within a single optical transceiver. This results in an optical transceiver module that is much larger due to the net sum of the size of the transmit and receive pairs and the mounting structure required to affix the module. Furthermore, this configuration places constraints on the installation location of the optical transceiver for at least two reasons: the optical transceiver is too large to install in locations where aircraft space is limited (e.g., the aircraft nose); and the interaction regions of some of the distinct lines of sight may be obscured/perturbed (e.g., by disturbed air or aircraft structure) in certain installation locations.

### SUMMARY

An air data sensor system comprises a plurality of light detection and ranging (LiDAR) units spatially distributed on a vehicle body, with each of the LiDAR units comprising a transmit/receive module having a decoupled line of sight with respect to the other LiDAR units. A processor is in operative communication with each of the LiDAR units. The processor is configured to receive collected light data from each of the LiDAR units; correct for spatial separation between the decoupled lines of sight of the LiDAR units; compensate for alignment shifts due to perturbations in the vehicle body; and compute one or more air data parameters based on the collected light data, the corrections for spatial separation, and the compensation for alignment shifts. The LiDAR units are each configured to transmit light into respective external interaction air regions, and collect scattered portions of the transmitted light from the external interaction air regions.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a Light Detection and Ranging (LiDAR) air data sensor system that employs multiple decoupled lines-of-sight, according to one embodiment;
Figure 2 is a block diagram of a transmit/receive module that can be implemented in the LiDAR air data sensor system of Figure 1;
Figure 3 is a flow diagram of an exemplary operational method for the LiDAR air data sensor system of Figure 1;
Figure 4A is a front view of an aircraft that depicts an exemplary decoupled line of sight (LOS) configuration for individual transmit/receive modules of a LiDAR air data sensor system on the aircraft;
Figure 4B is a top view of the aircraft of Figure 4A, depicting the exemplary decoupled LOS configuration for the LiDAR air data sensor system on the aircraft; and
Figure 5 is a block diagram of an alternative transmit/receive module configuration that can be implemented in a LiDAR air data sensor system.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A Light Detection and Ranging (LiDAR) air data sensor system and method for a vehicle are described herein. The air data sensor system is configured to have multiple decoupled lines of sight by employing separate LiDAR transmit/receive pairs that are decoupled or individually packaged and spatially distributed on the vehicle body. The received light by each transmit/receive pair is coupled into a common processing device to deduce air data parameters from the received data.

As used herein, transmit/receive pairs with "decoupled" lines of sight refer to transmit/receive pairs that are spatially separated and not mounted in the same housing. The air data sensor system can be implemented in various vehicles, including airborne vehicles, which can be manned or unmanned aircraft, as well as ground-based vehicles such as cars, trucks, trailers, and the like.

In one embodiment, the air data sensor system includes a plurality of LiDAR units, each of which include a transmit/receive pair. The LiDAR units are spatially distributed on a vehicle body, such an aircraft fuselage, so as to provide decoupled lines of sight. The LiDAR units are configured to transmit light into an external interaction air region, and collect scattered portions of light from the external interaction air region. A processor is in operative communication with each of the LiDAR units and is configured to receive collected light data from each of the LiDAR units. The processor corrects the data for spatial separation between the lines of sight, compensates for alignment shifts, and computes one or more air data parameters.

In one embodiment, the plurality of LiDAR units comprises at least three LiDAR units. In another embodiment, the plurality of LiDAR units comprises four or more LiDAR units.

The air data sensor system provides many technical advantages and benefits over prior approaches, which package all of the transmit/receive pairs into a common apparatus. For example, the present system enables lower total power consumption; provides installation flexibility where aircraft real estate is limited; and provides optimized installation of the transmit/receive pairs to sample specific interaction regions of interest and avoid obscuration or perturbation of the interaction region to the transmit/receive pairs. The present system also provides better damage tolerance; provides lower-cost maintenance as a smaller line replaceable unit (LRU) can be used with less cost and can be selectively replaced; provides better minimum equipment list go/no-go capability since only three lines of sight are needed to measure key flight parameters; and provides lower manufacturing costs for a product as a result of the higher volumes of transmit/receive pairs required for a full system.

Further details of the present system and method are described hereafter with reference to the drawings.

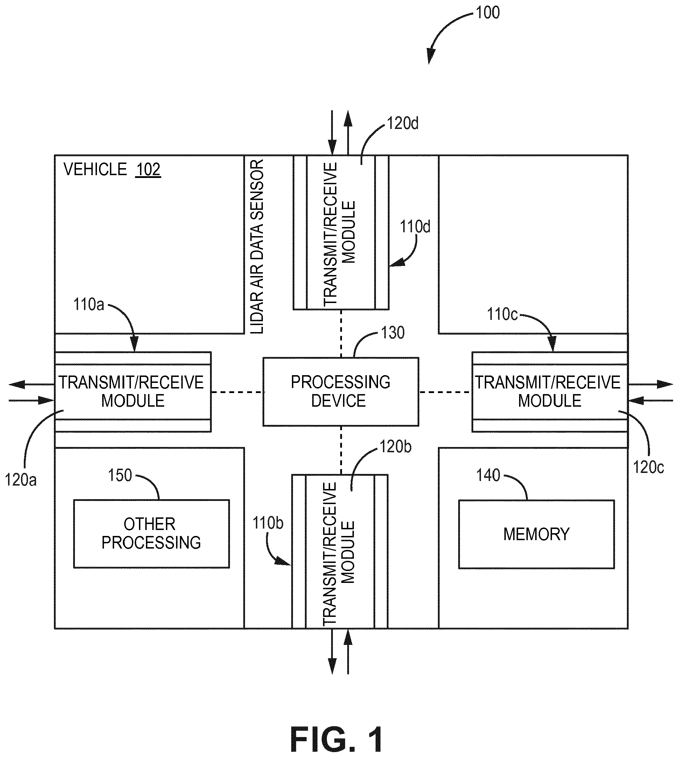

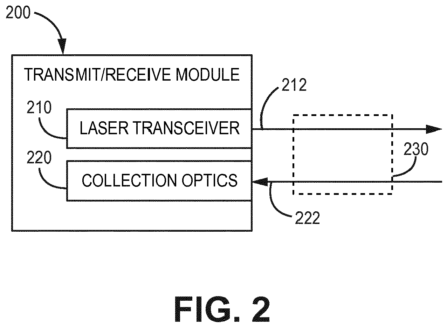

Figure 1 is a block diagram of a LiDAR air data sensor system 100 for a vehicle 102, such as an aircraft, according to one embodiment. The air data sensor system 100 includes a plurality of LiDAR units 110a-110d spatially distributed and mounted on a body of vehicle 102 such that each LiDAR unit has a different line of sight (LOS). Each of the LiDAR units 110a-110d comprise a respective transmit/receive module 120a-120d, each of which includes a single laser transceiver and a single set of light collection optics, as described further hereafter with respect to Figure 2.

An onboard processing device 130 is in operative communication with each of the transmit/receive modules 120a-120d. The processing device 130 is configured to receive collected light data from each of the LiDAR units 110a-110d and process the data to produce air data parameters, as described further hereafter. At least one memory unit 140 is in operative communication with processing device 130 and is configured to store program instructions and data. In addition, other onboard processing devices 150 are configured to receive an output from processing device 130. The onboard processing devices 150 can include a central air data computer, a flight management system, a data concentration network, a central maintenance computer, or the like.

During operation, air data sensor system 100 remotely interrogates a volume of free stream air using laser light from each of the LiDAR units. The laser light is transmitted through transmission optics into the atmosphere, and the backscattered reflection is collected via the light collection optics. The system analyzes the backscattered reflection (e.g., molecular and aerosol, or molecular only or aerosol only) to derive the air data parameters. Such air data parameters include, but are not limited to, true air speed vector, air temperature, air pressure, angle of attack, angle of sideslip, or the like.

When implemented in an aircraft, the air velocity along each LOS of air data sensor system 100 is calculated by measuring the difference in frequency (Doppler shift) between the transmitted light and backscattered light. The air velocity relative to the aircraft body can then be computed given that the geometry of each LOS is known in relation to the aircraft body. The air speed vector can be derived from the backscattered Doppler shift. The air temperature and air pressure can be derived from the backscattered spectrum.

Figure 2 is a block diagram of an exemplary transmit/receive module 200 that can be implemented in an air data sensor system such as shown in Figure 1. The transmit/receive module 200 is part of a LiDAR unit and includes a laser transceiver 210 configured to transmit laser light 212, and a set of collection optics 220 configured to collect scattered portions 222 of laser light. For example, laser transceiver 210 is configured to transmit laser light 212 into an external interaction air region 230 in the LOS of the LiDAR unit. The collection optics 220 is configured to receive scattered portions 222 of laser light from interaction air region 230.

The position of interaction air region 230 relative to the vehicle body can vary depending on the location of the LiDAR unit on the vehicle. For example, the interaction air region for a LiDAR unit mounted toward the tail of an aircraft needs to be further away from the aircraft to avoid disturbed air near the aircraft, whereas the interaction air region for a LiDAR unit mounted on the nose of the aircraft can be closer to the aircraft.

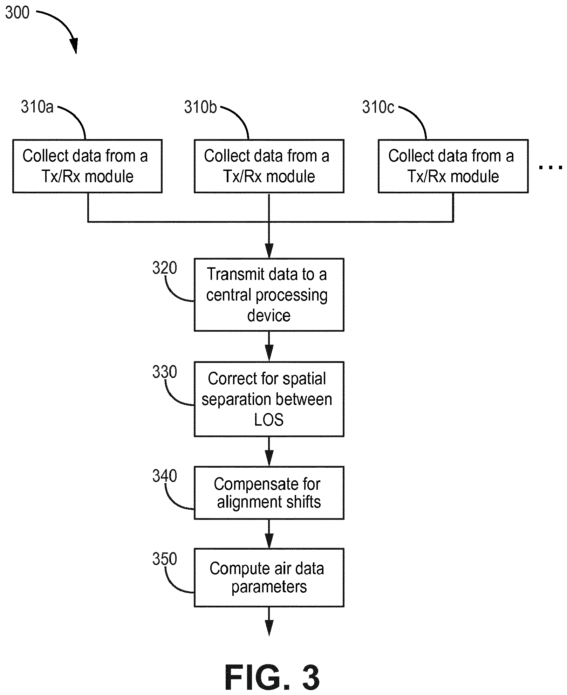

Figure 3 is a flow diagram of an exemplary operational method 300 for an air data sensor system such as shown in Figure 1. Initially, data is collected from each of at least three transmit/receive (Tx/Rx) modules (blocks 310a-310c). The collected data is then transmitted from each Tx/Rx module to a central processing device (block 320). The processing device is configured to correct the data for spatial separation between the LOS of each Tx/Rx module (block 330), and compensate for alignment shifts due to perturbations in the vehicle body (block 340). The compensation for alignment shifts can be implemented using auxiliary sensors, such as inertial sensors, which are used to detect and compensate for LOS shifts due to the vehicle body perturbations. Such vehicle body perturbations can occur, for example, in the aircraft wings and fuselage, which will flex in flight. The processing device then computes air data parameters based on the corrected/compensated data (block 350). The air data parameters are then output for use by other vehicle systems, such as a flight management system, data buses, or other onboard computers.

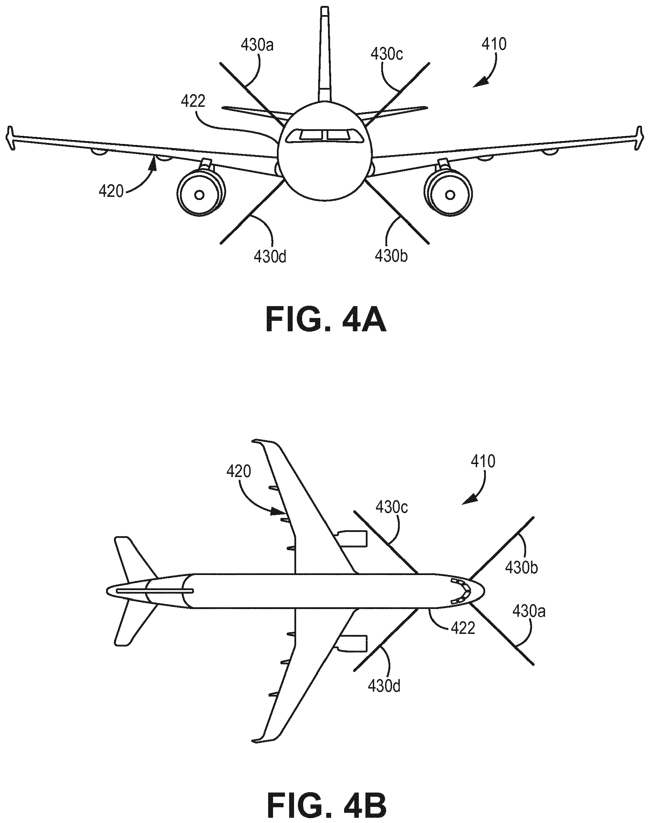

Figures 4A and 4B illustrate an exemplary decoupled LOS configuration 410 for individual transmit/receive modules of an air data sensor system, such as shown in Figure 1, which is implemented on an aircraft 420. Individual transmit/receive modules are spatially distributed on a fuselage 422 of aircraft 420 to produce multiple decoupled lines of sight 430a-430d for the air data sensor system.

As the decoupling of the LOS for the transmit/receive modules increases the complexity of alignment with respect to each other, and with respect to the aircraft axes, the processing device of the air data system needs to correct for the spatial separation and compensate for alignment shifts due to perturbations in the air frame of the aircraft during flight.

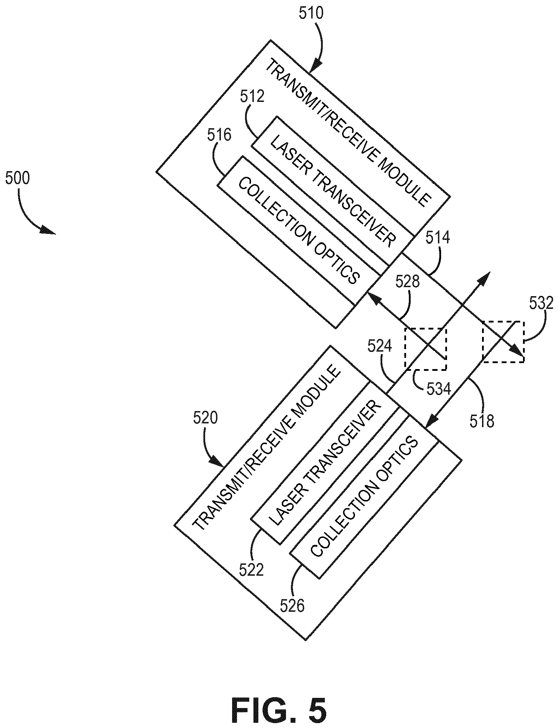

In an alternative embodiment of the air data sensor system, at least one of the LiDAR units is configured to collect scattered portions of light transmitted from a different one of the LiDAR units. Such as arrangement is shown in Figure 5, which is a block diagram of an alternative transmit/receive module configuration 500 that can be implemented in the LiDAR units of the air data sensor system. In this arrangement, a first transmit/receive module 510, which is part of a LiDAR unit, includes a laser transceiver 512 configured to transmit laser light 514, and a set of collection optics 516. A second transmit/receive module 520, which is part of a separate LiDAR unit, includes a laser transceiver 522 configured to transmit laser light 524, and a set of collection optics 526. The transmit/receive modules 510 and 520 are arranged on a vehicle such that scattered portions of light transmitted from one transmit/receive module is collected by the other transmit/receive module.

For example, as depicted in Figure 5, laser transceiver 512 of transmit/receive module 510 transmits laser light 514 into an external interaction air region 532 in its LOS. The collection optics 526 of transmit/receive module 520 receives scattered portions 518 of laser light from interaction air region 532. Likewise, laser transceiver 522 of transmit/receive module 520 transmits laser light 524 into an external interaction air region 534 in its LOS. The collection optics 516 of transmit/receive module 510 receives scattered portions 528 of laser light from interaction air region 534.

A processor used in the present system can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer readable instructions for carrying out various process tasks, calculations, and control functions used in the present system.

The present methods can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. Various process tasks can include controlling spatial scanning and orientation, laser operation, photodetector control and operation, and awareness of system orientation and state. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard disks, compact disks, or other optical storage disks; volatile or nonvolatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

### Example Embodiments

Example 1 includes an air data sensor system, comprising: a plurality of light detection and ranging (LiDAR) units spatially distributed on a vehicle body, each of the LiDAR units comprising a transmit/receive module with a decoupled line of sight with respect to the other LiDAR units; and a processor in operative communication with each of the LiDAR units. The processor is configured to receive collected light data from each of the LiDAR units; correct for spatial separation between the decoupled lines of sight of the LiDAR units; compensate for alignment shifts due to perturbations in the vehicle body; and compute one or more air data parameters based on the collected light data, the corrections for spatial separation, and the compensation for alignment shifts. The LiDAR units are each configured to transmit light into respective external interaction air regions, and collect scattered portions of the transmitted light from the external interaction air regions.
Example 2 includes the system of Example 1, wherein the transmit/receive module in each of the LiDAR units includes a single laser transceiver and a single set of light collection optics.
Example 3 includes the system of any of Examples 1-2, wherein the plurality of LiDAR units comprises at least three LiDAR units.
Example 4 includes the system of any of Examples 1-2, wherein the plurality of LiDAR units comprises four or more LiDAR units.
Example 5 includes the system of any of Examples 1-4, further comprising at least one memory unit in operative communication with the processor.
Example 6 includes the system of any of Examples 1-5, further comprising one or more onboard processing devices operative to receive the air data parameters from the processor.
Example 7 includes the system of any of Examples 1-6, wherein the vehicle body comprises a fuselage of an aircraft.
Example 8 includes the system of any of Examples 1-7, wherein the computed one or more air data parameters comprises a true air speed vector, an air temperature, an air pressure, an angle of attack, or an angle of sideslip.
Example 9 includes the system of any of Examples 1-8, wherein at least one of the LiDAR units is configured to collect scattered portions of light transmitted from a different one of the LiDAR units.
Example 10 includes a method of obtaining air data for a vehicle, the method comprising: providing a plurality of LiDAR units spatially distributed on a body of the vehicle, each of the LiDAR units comprising a transmit/receive module with a decoupled line of sight with respect to the other LiDAR units; transmitting light from each of the LiDAR units into a respective external interaction air region; receiving scattered portions of the transmitted light from each external interaction air region into the LiDAR units to collect light data; sending the collected light data from each transmit/receive module to a processor; correcting the collected light data for spatial separation between the decoupled lines of sight of the LiDAR units; compensating the collected light data for any alignment shifts due to perturbations in the body of the vehicle; and computing one or more air data parameters based on the collected light data, the correction for spatial separation, and the compensation for alignment shifts.
Example 11 includes the method of Example 10, wherein the transmit/receive module in each of the LiDAR units includes a single laser transceiver and a single set of light collection optics.
Example 12 includes the method of any of Examples 10-11, wherein the plurality of LiDAR units comprises at least three LiDAR units.
Example 13 includes the method of any of Examples 10-12, wherein the one or more air data parameters comprises a true air speed vector, an air temperature, an air pressure, an angle of attack, or an angle of sideslip.
Example 14 includes the method of any of Examples 10-13, further comprising outputting the one or more air data parameters to one or more other vehicle systems.
Example 15 includes the method of Example 14, wherein the one or more other vehicle systems comprise a flight management system, a data bus, or an onboard computer.
Example 16 includes the method of any of Examples 10-15, wherein the body of the vehicle comprises a fuselage of an aircraft.
Example 17 includes an air data sensor system for an aircraft, comprising: a plurality of LiDAR units spatially distributed on a fuselage of the aircraft, each of the LiDAR units comprising a transmit/receive module with a decoupled line of sight with respect to the other LiDAR units, wherein the transmit/receive module in each of the LiDAR units includes a single laser transceiver and a single set of light collection optics; and a processor in operative communication with each of the LiDAR units. The processor is configured to receive collected light data from each of the LiDAR units; correct for spatial separation between the decoupled lines of sight of the LiDAR units; compensate for alignment shifts due to perturbations in the fuselage of the aircraft; and compute one or more air data parameters based on the collected light data, the corrections for spatial separation, and the compensation for alignment shifts. The LiDAR units are each configured to transmit light into respective external interaction air regions, and collect scattered portions of the transmitted light from the external interaction air regions. At least one of the LiDAR units is configured to collect scattered portions of light transmitted from a different one of the LiDAR units.
Example 18 includes the system of Example 17, wherein the plurality of LiDAR units comprises at least three LiDAR units.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. An air data sensor system, comprising:
a plurality of light detection and ranging (LiDAR) units spatially distributed on a vehicle body, each of the LiDAR units comprising a transmit/receive module with a decoupled line of sight with respect to the other LiDAR units; and
a processor in operative communication with each of the LiDAR units, wherein the processor is configured to:
receive collected light data from each of the LiDAR units;
correct for spatial separation between the decoupled lines of sight of the LiDAR units;
compensate for alignment shifts due to perturbations in the vehicle body;and
compute one or more air data parameters based on the collected light data, the corrections for spatial separation, and the compensation for alignment shifts;
wherein the LiDAR units are each configured to transmit light into respective external interaction air regions, and collect scattered portions of the transmitted light from the external interaction air regions.

2. The system of claim 1, wherein the transmit/receive module in each of the LiDAR units includes a single laser transceiver and a single set of light collection optics.

3. The system of claim 1, wherein the plurality of LiDAR units comprises at least three LiDAR units.

4. The system of claim 1, further comprising:
at least one memory unit in operative communication with the processor; and
one or more onboard processing devices operative to receive the air data parameters from the processor.

5. The system of claim 1, wherein the vehicle body comprises a fuselage of an aircraft.

6. The system of claim 1, wherein the computed one or more air data parameters comprises a true air speed vector, an air temperature, an air pressure, an angle of attack, or an angle of sideslip.

7. The system of claim 1, wherein at least one of the LiDAR units is configured to collect scattered portions of light transmitted from a different one of the LiDAR units.

8. A method of obtaining air data for a vehicle, the method comprising:
providing a plurality of light detection and ranging (LiDAR) units spatially distributed on a body of the vehicle, each of the LiDAR units comprising a transmit/receive module with a decoupled line of sight with respect to the other LiDAR units;
transmitting light from each of the LiDAR units into a respective external interaction air region;
receiving scattered portions of the transmitted light from each external interaction air region into the LiDAR units to collect light data;
sending the collected light data from each transmit/receive module to a processor;
correcting the collected light data for spatial separation between the decoupled lines of sight of the LiDAR units;
compensating the collected light data for any alignment shifts due to perturbations in the body of the vehicle; and
computing one or more air data parameters based on the collected light data, the correction for spatial separation, and the compensation for alignment shifts.

9. The method of claim 8, wherein the one or more air data parameters comprises a true air speed vector, an air temperature, an air pressure, an angle of attack, or an angle of sideslip.

10. The method of claim 8, further comprising outputting the one or more air data parameters to one or more other vehicle systems.
